# EUROPEAN PATENT SPECIFICATION

(11) **EP 4 459 600 B1**
(45) Date of publication and mention of the grant of the patent: **28.01.2026**
(21) Application number: 22916179.9
(22) Date of filing: 28.12.2022
(51) Int. Cl.: G09B 9/12, G09B 9/16, G09B 9/28, G09B 9/46, G05G 5/03

(54) **SIMULATOR FOR AIRCRAFT**
SIMULATOR FÜR FLUGZEUGE
SIMULATEUR POUR AÉRONEF

(30) Priority: 28.12.2021 JP 2021215248
(43) Date of publication of application: 06.11.2024
(73) Proprietor: KAWASAKI JUKOGYO KABUSHIKI KAISHA, Kobe-shi, Hyogo 650-8670 (JP)
(72) Inventor: MURATA, Yoshio, Kobe-shi, Hyogo 650-8670 (JP); KOMATSU, Seiji, Kobe-shi, Hyogo 650-8670 (JP); KURACHI, Osamu, Kobe-shi, Hyogo 650-8670 (JP); NISHIMURA, Hirofumi, Kobe-shi, Hyogo 650-8670 (JP); KOBAYASHI, Takumi, Kobe-shi, Hyogo 650-8670 (JP); YOSHITANI, Shinichi, Kobe-shi, Hyogo 650-8670 (JP); SHIMIZU, Yuki, Kobe-shi, Hyogo 650-8670 (JP); KAWABE, Yuji, Kobe-shi, Hyogo 650-8670 (JP); OSAKI, Kohei, Kobe-shi, Hyogo 650-8670 (JP); TAKADA, Kiyoshiro, Kobe-shi, Hyogo 650-8670 (JP)
(74) Representative: Leinweber & Zimmermann
(86) International application number: PCT/JP2022/048630
(87) International publication number: WO 2023/127957

(56) References cited:
- WO-A1-2021/261596
- GB-A- 611 560
- JP-A- 2002 014 736
- JP-A- 2011 175 630
- JP-A- H05 265 585
- KR-A- 20170 060 904
- US-A- 5 727 188
- US-A- 5 727 188
- US-A1- 2009 189 024
- US-B1- 10 724 632

## Description

### FIELD

The technique disclosed here relates to a flight simulation control apparatus.

### BACKGROUND

Aircraft piloting devices with mechanisms that generate piloting reaction forces of control sticks or other devices to obtain a sense of piloting have been known to date. A piloting device disclosed in Patent Document 1 includes a cylinder housing a compression spring, and a rod inserted into the cylinder to be movable forward and backward. In this piloting device, rotation of a control stick causes the rod to move forward and backward from the cylinder so that the compression spring is deformed. An elastic force of the deformed compression spring acts on the control stick as an operating reaction force.

### CITATION LIST

### PATENT DOCUMENT

Patent Document 1: Japanese Patent Application Publication No. 10-59293. US 5 727 188 A1 discloses another computer input device for simulating manual controls of a vehicle.

### SUMMARY

In the case of constructing the simulation control apparatus described above as a simulation control apparatus for simulation training, the simulation control apparatus is preferably compact as a whole. The piloting device described above, however, still has room for improvement in terms of miniaturization.

It is therefore an object of the technique disclosed here to reduce the size of a simulation control apparatus for an aircraft.

A flight simulation control apparatus disclosed here includes: an operating member that rotates about a first axis in both directions; and a reaction force generator including an elastic structure that is deformed by rotation of the operating member and generates an operating reaction force of the operating member. The reaction force generator further includes a transferer, a first arm, and a second arm. The transferer is connected to the operating member and rotates together with the operating member. The first arm rotates about a second axis and deforms the elastic structure when rotation of the operating member in one direction is transferred to the first arm through the transferer. The second arm rotates about a third axis extending in an identical direction to the second axis and deforms the elastic structure when rotation of the operating member in another direction is transferred to the second arm through the transferer. The reaction force generator, the first arm and the second arm are located adjacent to each other in rotation directions thereof, and are biased by the elastic structure in directions in which the first arm and the second arm approach each other. The flight simulation control apparatus further includes a neutral position changer that includes a restrictor that is located between the first arm and the second arm and restricts rotation of the first arm and the second arm in the directions in which the first arm and the second arm approach each other, and the neutral position changer changes a neutral position of the operating member by rotating the transferer, the first arm, and the second arm together about the first axis, the second axis, and the third axis through rotational movement of the restrictor about a fourth axis extending in an identical direction to the second axis.

The flight simulation control apparatus described above can be downsized.

### BRIEF DESCRIPTION OF THE DRAWINGS

[FIG. 1] FIG. 1 is a left side view illustrating a schematic configuration of a simulation control apparatus.
[FIG. 2] FIG. 2 is a schematic view illustrating a control stick of the simulation control apparatus and a peripheral portion thereof seen from the rear.
[FIG. 3] FIG. 3 is a cross-sectional view taken along line A-A in FIG. 2.
[FIG. 4] FIG. 4 is a cross-sectional view taken along line B-B in FIG. 2.
[FIG. 5] FIG. 5 is a cross-sectional view taken along line C-C in FIG. 2.
[FIG. 6] FIG. 6 illustrates an example of operation of a reaction force generator and corresponds to FIG. 5.
[FIG. 7] FIG. 7 illustrates an example of operation of the reaction force generator and corresponds to FIG. 5.
[FIG. 8] FIG. 8 is a graph showing an operating force gradient.
[FIG. 9] FIG. 9 illustrates an example of operation of changing a neutral position and corresponds to FIG. 5.
[FIG. 10] FIG. 10 is a schematic view illustrating a ladder pedal of the simulation control apparatus and a peripheral portion thereof seen from the left.
[FIG. 11] FIG. 11 is a cross-sectional view taken along line A-A in FIG. 10.
[FIG. 12] FIG. 12 illustrates an example of operation of the reaction force generator and corresponds to FIG. 11.
[FIG. 13] FIG. 13 illustrates a schematic configuration of a reaction force generator according to another embodiment.
[FIG. 14] FIG. 14 illustrates operation of changing a neutral position according to another embodiment and corresponds to FIG. 13.

### DESCRIPTION OF EMBODIMENTS

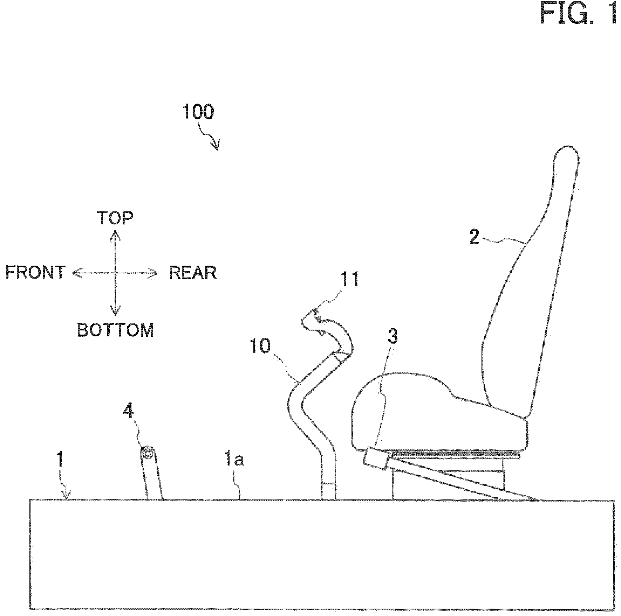

An exemplary embodiment will be specifically described hereinafter with reference to the drawings. FIG. 1 is a left side view illustrating a schematic configuration of a simulation control apparatus 100.

The simulation control apparatus 100 according to this embodiment is a simulation control apparatus for an aircraft, and used for, for example, simulation training of an aircraft using a VR space. That is, a pilot or a copilot as a trainee operates the simulation control apparatus 100 to thereby cause an aircraft to fly in a VR space. In this embodiment, the simulation control apparatus 100 is used for simulation training of a helicopter.

As illustrated in FIG. 1, the simulation control apparatus 100 includes a chassis 1. In a space above the chassis 1, a pilot or a copilot as a trainee is seated on a seat 2 and operates an aircraft. The chassis 1 includes a top panel 1a on which the seat 2, a collective lever 3, ladder pedals 4, and a control stick 10 are located. The collective lever 3, the ladder pedals 4, and the control stick 10 are examples of operating members. In this embodiment, a top-bottom direction, a front-rear direction, and a left-right direction of the trainee seated on the seat 2 will be hereinafter referred to as a top-bottom direction, a front-rear direction, and a left-right direction, respectively, for convenience of description.

As an example, the collective lever 3 is located at the left of the seat 2. The collective lever 3 is used for causing the aircraft to ascend or descend or controlling the speed of the aircraft by pulling up or pushing down operation of the trainee such as the pilot. That is, with the pulling up or pushing down operation of the collective lever 3, the collective lever 3 rotates about a rotation shaft located below the collective lever 3, and using displacement of this rotation as a control input value, the aircraft ascends or descends or the speed of the aircraft changes.

The control stick 10 is located forward of the seat 2 and between the feet of the trainee such as the pilot. The control stick 10 is also called a cyclic stick, and enables tilting operation in two-axis directions of the front-rear direction and the left-right direction. The control stick 10 is used for raising or lowering the nose of the aircraft to cause the aircraft to ascend and descend with the tilting operation by the trainee such as the pilot in the front-rear direction. That is, when the control stick 10 is tilted in the front-rear direction, the rotation shaft for the front-rear direction located below the control stick 10 rotates, and using displacement of this rotation as a control input value, the aircraft performs a pitching motion. The control stick 10 is also used for tilting the aircraft to the left or to the right with the tilting operation by the trainee such as the pilot in the left-right direction. That is, when the control stick 10 is tilted in the left-right direction, the rotation shaft for the left-right direction located below the control stick 10 rotates, and using displacement of this rotation as a control input value, the aircraft performs a rolling motion.

The ladder pedals 4 are located at the feet of the trainee such as the pilot, and one of the pedals 4 corresponds to the left foot and the other corresponds to the right foot. The ladder pedals 4 allow the aircraft to perform a yawing motion to the left or to the right when being stepped with the feet of the trainee such as the pilot. That is, with rotation operation of the ladder pedals 4, the aircraft performs a yawing motion.

In this manner, the collective lever 3, the ladder pedals 4, and the control stick 10 are rotatable about a predetermined axis in both directions by operation of the trainee such as the pilot.

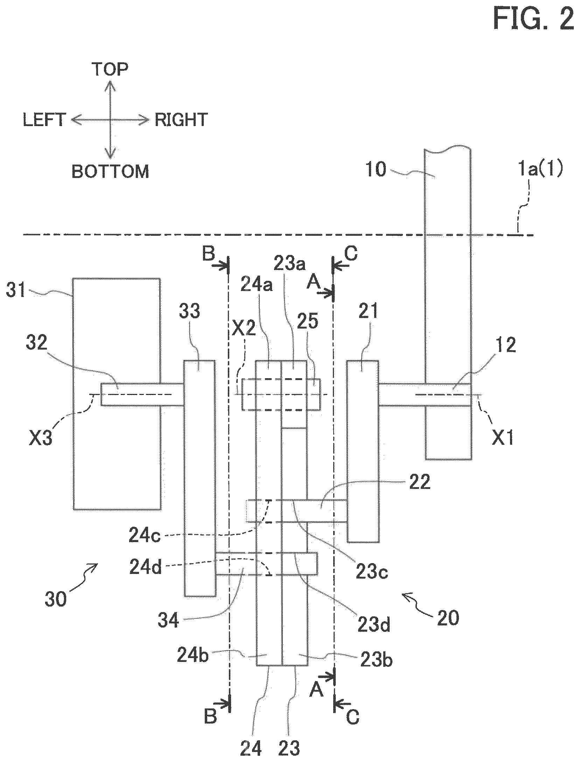

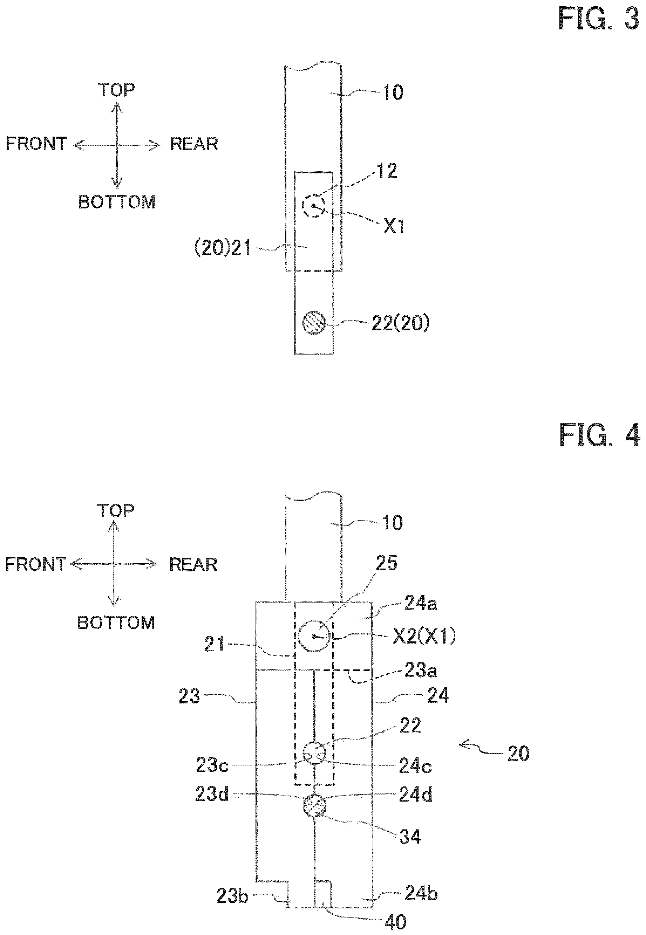

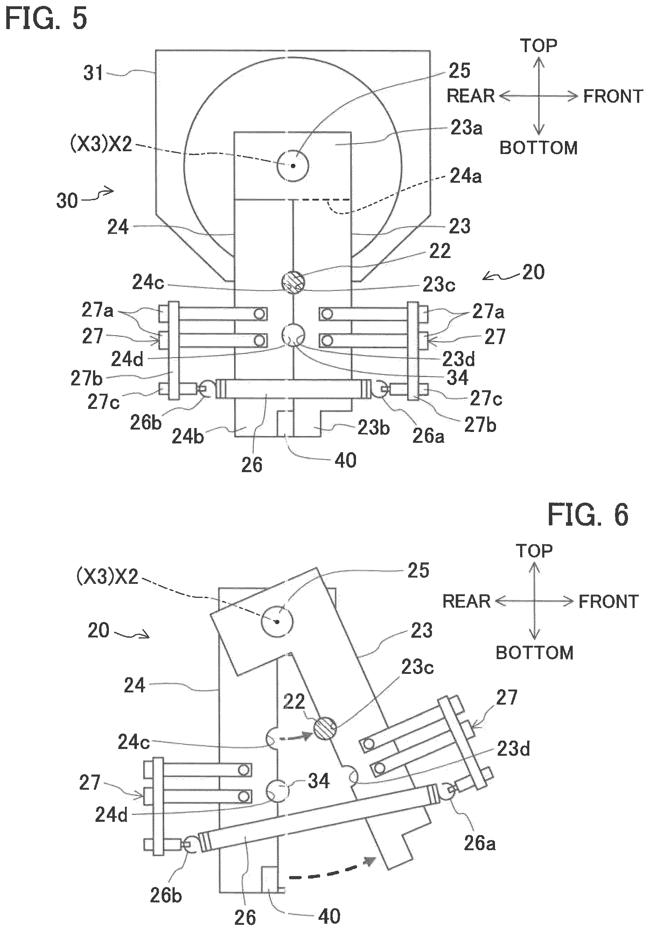

FIG. 2 is a schematic view of the control stick 10 of the simulation control apparatus 100 and a peripheral portion thereof seen from the rear. FIG. 3 is a cross-sectional view taken along line A-A in FIG. 2. FIG. 4 is a cross-sectional view taken along line B-B in FIG. 2. FIG. 5 is a cross-sectional view taken along line C-C in FIG. 2.

The simulation control apparatus 100 includes the collective lever 3, the ladder pedals 4, and the control stick 10 described above, and also includes reaction force generators 20 and neutral position changers 30 associated with each of the rotation shafts of the collective lever 3, the ladder pedals 4, and the control stick 10. The reaction force generators 20 have substantially the same basic structure, and the neutral position changers 30 have substantially the same basic structure. Description of this example is directed to the reaction force generator 20 and the neutral position changer 30 associated with the control stick 10. The reaction force generators 20 and the neutral position changers 30 associated with the control stick 10 are used in two sets, one of which is for tilting operation in the front-rear direction and the other is for tilting operation in the left-right direction. In this example, the reaction force generator 20 and the neutral position changer 30 for the tilting operation of the control stick 10 in the front-rear direction will be described. In this example, since one rotation shaft is used for each of the collective lever 3 and the ladder pedals 4, one reaction force generator 20 and one neutral position changer 30 are also associated with each of the collective lever 3 and the ladder pedals 4.

A portion of the control stick 10, the reaction force generator 20, and the neutral position changer 30 are housed in the chassis 1. The same holds for the reaction force generators 20 and the neutral position changers 30 associated with the collective lever 3 and the ladder pedals 4.

The control stick 10 is rotatable about an axis X1 in both directions. The control stick 10 are a shaft extending in the top-bottom direction. More specifically, the control stick 10 penetrates the top panel 1a and extends in the inside and outside of the chassis 1. The axis X1 is an example of a first axis.

A shaft 12 having the axis X1 is located in a lower end potion of the control stick 10. Specifically, the shaft 12 extends in the left-right direction. The shaft 12 penetrates the lower end portion of the control stick 10 and is fixed to the control stick 10. That is, the control stick 10 is non-rotatable with respect to the shaft 12. In this manner, the control stick 10 is rotatable about the axis X1 in both directions together with the shaft 12. That is, the control stick 10 and the shaft 12 are rotatable about the axis X1 in the front-rear direction. The shaft 12 is rotatably supported by a bearing or other components.

As illustrated in FIG. 1, the control stick 10 includes an operation switch 11. The operation switch 11 is used for allowing the trainee such as the pilot to instruct predetermined change operation to the neutral position changer 30 described later.

The reaction force generator 20 generates an operating reaction force when the trainee such as the pilot operates the control stick 10 and, when the trainee such as the pilot releases his/her hand from the control stick 10, causes the control stick 10 to return to a position at which the control stick 10 naturally stops, that is, to a neutral state. In this example, the neutral state in the case described for the state of each structure refers to a state where both a first arm 23 and a second arm 24 described later are in contact with a transferer 22, as illustrated in FIGS. 2 through 5. The state where both the first arm 23 and the second arm 24 are in contact with the transferer 22 will be hereinafter referred to as a neutral state.

As illustrated in FIG. 5, the reaction force generator 20 includes a tension spring 26 that is deformed by rotation of the control stick 10 and generates an operating reaction force of the control stick 10. The reaction force generator 20 also includes the transferer 22, the first arm 23, and the second arm 24.

The transferer 22 is connected to the control stick 10 and rotates together with the control stick 10. The transferer 22 transfers rotation of the stick 10 to the first arm 23 or the second arm 24.

Specifically, the transferer 22 is a rod that extends in the same direction as the shaft 12, that is, in the left-right direction. In this example, a cross section orthogonal to the axis of the transferer 22 has a circular shape. The reaction force generator 20 also includes a connector 21 that connects the transferer 22 to the shaft 12. In this example, the connector 21 is a rod extending in the top-bottom direction. The connector 21 has an upper end, which is one end, connected to one end of the shaft 12, and a lower end, which is the other end, connected to one end of the transferer 22. More specifically, the shaft 12 and the transferer 22 are connected to extend in opposite ways in the left-right direction from the connector 21. In this example, as illustrated in FIG. 2, the shaft 12 is connected to extend rightward from the connector 21, and the transferer 22 is connected to extend leftward from the connector 21. That is, the connector 21 is located between the shaft 12 and the transferer 22 in the direction in which the shaft 12 and the transferer 22 extend.

In this manner, the transferer 22 and the shaft 12 are connected to each other through the connector 21 so that the transferer 22 is thereby connected to the control stick 10 through the connector 21 and the shaft 12. Accordingly, the transferer 22 rotates together with the control stick 10 in both directions about the axis X1. More specifically, the transferer 22 turns about the axis X1 as a turning center with rotation of the control stick 10.

When rotation of the control stick 10 in one way is transferred to the first arm 23 through the transferer 22, the first arm 23 thereby rotates about an axis X2 extending in the same direction as the axis X1 and deforms the tension spring 26. When rotation of the control stick 10 in the other way is transferred to the second arm 24 through the transferer 22, the second arm 24 thereby rotates about the axis X2 extending in the same direction as the axis X1 and deforms the tension spring 26. The axis X2 corresponds to a second axis and a third axis. That is, in this example, the second axis and the third axis are the common axis X2. The first arm 23 and the second arm 24 will be hereinafter simply referred to as the arms 23 and 24, when these arms are not particularly distinguished.

The first arm 23 and the second arm 24 are members each extending in the top-bottom direction. The first arm 23 and the second arm 24 are arranged side by side in the left-right direction. Each of the first arm 23 and the second arm 24 has an inverted L-shape when seen in the left-right direction. The first arm 23 and the second arm 24 overlap each other in the left-right direction in first ends 23a and 24a that are upper ends thereof, that is, portions corresponding to the horizontal bars of the L-shapes. The first arm 23 and the second arm 24 do not overlap each other in the left-right direction in portions other than the first ends 23a and 24a, that is, portions corresponding to the vertical bars of the L-shapes. In other words, the first arm 23 and the second arm 24 are arranged such that portions other than the first ends 23a and 24a are located adjacent to each other in the rotation directions thereof. In this example, the rotation directions are the front-rear direction.

The first arm 23 and the second arm 24 are rotatable about the axis X2. Specifically, one common shaft 25 having the axis X2 is located in the first ends 23a and 24a of the first arm 23 and the second arm 24. Specifically, the shaft 25 is a member extending in the left-right direction. The shaft 25 penetrates the first ends 23a and 24a of the arms 23 and 24. The arms 23 and 24 are rotatable about the shaft 25. That is, the first arm 23 and the second arm 24 are rotatable in the front-rear direction. In this example, the axis X2 is coaxial with the axis X1.

Each of the first arm 23 and the second arm 24 includes two recesses. Specifically, the first arm 23 includes a first recess 23c and a second recess 23d, and the second arm 24 includes a first recess 24c and a second recess 24d. The first recesses 23c and 24c and the second recesses 23d and 24d are located on opposite surfaces that face each other in the front-rear direction in portions other than the first ends 23a and 24a of the first arm 23 and the second arm 24. The first recesses 23c and 24c and the second recesses 23d and 24d are located in this order from above in the arms 23 and 24. In other words, in this example, the second recesses 23d and 24d are located below the first recesses 23c and 24c. The first recess 23c of the first arm 23 and the first recess 24c of the second arm 24 face each other in the front-rear direction, and the second recess 23d of the first arm 23 and the second recess 24d of the second arm 24 face each other in the front-rear direction.

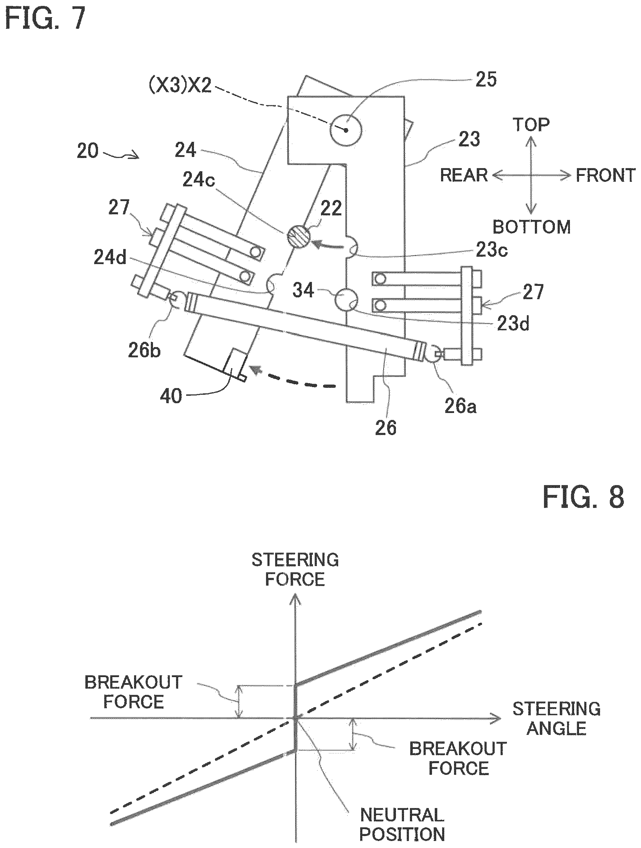

Each of the first recesses 23c and 24c is, for example, semicircular when seen in the left-right direction. The first recesses 23c and 24c are shaped such that the outer periphery of the transferer 22 is fitted in the first recesses 23c and 24c in the neutral state. In this example, since the cross section orthogonal to the axis of the transferer 22 has a circular shape, each of the first recesses 23c and 24c has a semicircular shape. However, in a case where the cross-sectional shape orthogonal to the axis of the transferer 22 is a rectangle, for example, each of the first recesses 23c and 24c also has a rectangular shape. With this configuration, the first arm 23 and the second arm 24 receive rotation of the control stick 10 through the transferer 22 and rotate. For example, when the control stick 10 rotates rearward, as illustrated in FIG. 6, the transferer 22 rotates about the axis X1 in the same rotation direction as the control stick 10, and the rotation of the transferer 22 causes the first arm 23 to rotate about the axis X2. When the control stick 10 rotates forward, as illustrated in FIG. 7, the transferer 22 rotates about the axis X1 in the same rotation direction as the control stick 10, and the rotation of the transferer 22 causes the second arm 24 to rotate about the axis X2. Each of the second recesses 23d and 24d is, for example, semicircular when seen in the left-right direction. The second recesses 23d and 24d are shaped such that a restrictor 34 of the neutral position changer 30 described later is fitted in the second recesses 23d and 24d in the neutral state illustrated in FIG. 5.

The tension spring 26 is an example of an elastic structure, and is a coil spring. The tension spring 26 is connected to the first arm 23 and the second arm 24. More specifically, the tension spring 26 is connected to the first arm 23 and the second arm 24 through fittings 27. A first end 26a of the tension spring 26 is connected to the first arm 23 through the fitting 27. A second end 26b of the tension spring 26 is connected to the second arm 24 through the fittings 27.

As illustrated in FIG. 5, in this example, each of the fittings 27 includes a first member 27a, a second member 27b, and an adjuster 27c. The first member 27a extends in the front-rear direction orthogonal to the top-bottom direction in which the arms 23 and 24 extend. On the opposite surfaces of the arms 23 and 24 that face each other in the front-rear direction, suppose surfaces on the sides opposite to the surfaces on which the first recesses 23c and 24c and the second recesses 23d and 24d are located are outer sides in the front-rear direction. Then, the first members 27a are so-called cantilever rods attached to the arms 23 and 24 to extend from the arms 23 and 24 to the outer sides in the front-rear direction. The second member 27b is a rod extending in the sane top-bottom direction as the arms 23 and 24, and has one end connected to an outer end of the first member 27a and the other end connected to the adjuster 27c. For example, the other end of the second member 27b has a screw hole penetrating in the front-rear direction, and the adjuster 27c is screwed into this screw hole.

The adjuster 27c is connected to the first end 26a and the second end 26b of the tension spring 26. The adjuster 27c adjusts the overall length of the tension spring 26 in the neutral state, and is an adjusting screw, for example. In other words, the neutral state is a state where the transferer 22 is fitted in both the first recesses 23c and 24c of the first arm 23 and the second arm 24.

In this manner, the tension spring 26 is connected to the first arm 23 and the second arm 24 so that the first arm 23 and the second arm 24 thereby deforms the tension spring 26 when being rotated by the transferer 22. For example, as illustrated in FIG. 6, when the first arm 23 is rotated by the transferer 22, the first end 26a of the tension spring 26 is pulled, and the tension spring 26 extends. At this time, the second arm 24 is biased to rotate in a direction toward the first arm 23 by an elastic force of the tension spring 26, but does not rotate because of restriction of rotation by the restrictor 34 described later. As illustrated in FIG. 7, when the second arm 24 is rotated by the transferer 22, the second end 26b of the tension spring 26 is pulled, and the tension spring 26 extends. At this time, the first arm 23 is biased to rotate in a direction toward the second arm 24 by an elastic force of the tension spring 26, but does not rotate because of restriction of rotation by the restrictor 34 described later. When the trainee such as the pilot releases his/her hand from the control stick 10 or loosen the grip, the first arm 23 and the second arm 24 approach each other by an elastic force of the tension spring 26 to be in the neutral state.

In this example, as illustrated in FIG. 5, the first end 26a and the second end 26b of the tension spring 26 are connected outside the arms 23 and 24. Thus, even in a case where the sizes of the arms 23 and 24 in the front-rear direction are small, the tension spring 26 has a sufficient length. Thus, it is possible to reduce plastic deformation of the tension spring 26 in a case where the rotation angles of the arms 23 and 24 from the neutral state are large. In addition, since the tension spring 26 is attached to the first member 27a and the second member 27b as rods without increase in size of the arms 23 and 24, increase in weight of the reaction force generator 20 can be suppressed.

In this example, as illustrated in FIG. 5, the first end 26a and the second end 26b of the tension spring 26 have hook shapes, and when the first end 26a and the second end 26b are hooked on an opening in the adjuster 27c, the tension spring 26 is connected to the adjuster 27c. A desired operating reaction force can be easily obtained by replacing the tension springs 26.

An elastic force of the elongated tension spring 26 acts on the control stick 10 as an operating reaction force through the arms 23 and 24 and the transferer 22. In this manner, the tension spring 26 is deformed by rotation of the control stick 10 and generates an operating reaction force of the control stick 10.

In the manner described above, in the reaction force generator 20, rotation of the control stick 10 is transferred by the transferer 22 to cause the first arm 23 and the second arm 24 to rotate so that the tension spring 26 is thereby deformed to generate an operating reaction force. Thus, as compared to a mechanism in which the rod is displaced in the axial direction thereof by rotation of the control stick to thereby deform the elastic structure and generate an operating reaction force, for example, operation space for the first arm 23, the second arm 24, and other components necessary for generating an operating reaction force is reduced. This reduces the size of the reaction force generator 20.

The first arm 23 and the second arm 24 are biased to approach each other by the tension spring 26. More specifically, in a state where the first arm 23 and the second arm 24 are closest to each other, that is, the overall length of the tension spring 26 is shortest, the tension spring 26 has a predetermined biasing force, that is, elastic force. That is, the overall length of the tension spring 26 in the neutral state is set to be larger than an equilibrium length.

FIG. 8 is a graph showing an operating force gradient. An operating angle is a rotation angle at or from the neutral position of the control stick 10, for example, and an operating force is a force for operating the control stick 10, for example, and corresponds to an operating reaction force. An operating force gradient indicated by the dotted line in FIG. 8 is an operating force gradient in a case where the overall length of the tension spring in the neutral state is set at an equilibrium length, and an operating force gradient indicated by the solid line in FIG. 8 is an operating force gradient in a case where the overall length of the tension spring 26 in the neutral state is set to be larger than the equilibrium length. As shown in FIG. 8, in the case where the overall length of the tension spring 26 in the neutral state is larger than the equilibrium length, a breakout force, that is, a predetermined biasing force in the neutral position, can be obtained as compared to the case where the overall length of the tension spring in the neutral state is set at the equilibrium length. By obtaining a breakout force, even when the trainee such as the pilot unintentionally applies a minute force to the control stick 10, the aircraft does not move and is stable in the neutral position. In addition, in the case of mounting an automatic piloting system such as an automatic flight control system (AFCS), an accurate neutral position needs to be detected, but when a breakout force is obtained, the neutral position can be definitely detected, and in addition, it is possible to make the trainee such as the pilot aware of the point to switch to manual operation. Accordingly, a state without a trim is maintained, and the aircraft can fly with stability.

The predetermined biasing force of the tension spring 26 in the neutral state is adjusted by adjusting the overall length of the tension spring 26 with the adjuster 27c. That is, the adjuster 27c is an example of an adjuster that adjusts the predetermined elastic force of the tension spring 26. For example, when the overall length of the tension spring 26 is increased by the adjuster 27c, the predetermined biasing force increases. In this example, the other end of the second member 27b has a screw hole penetrating the end in the front-rear direction, and the adjuster 27c that is an adjusting screw is screwed into the screw hole. Thus, the overall length of the tension spring 26 can be increased or reduced by rotating the adjuster 27c.

In addition, in the reaction force generator 20, the first arm 23, the second arm 24, and the transferer 22 are rotatable about the axis X2 as one unit.

The neutral position changer 30 performs a trim adjustment of the aircraft. The trim adjustment is to adjust the neutral position of the control stick 10 to enable the trainee such as the pilot to control the aircraft for stable flight. In this example, a position of the control stick 10 in a trim state where all the external forces such as an aerodynamic force and an engine output exerted on the aircraft are balanced by trim adjustment will be referred to as a neutral position. While the control stick 10 is at the neutral position, an operating force of the control stick 10 is zero.

The neutral position changer 30 includes the restrictor 34 located between the first arm 23 and the second arm 24. The restrictor 34 restricts rotation of the first arm 23 and the second arm 24 in the direction in which the first arm 23 and the second arm 24 approach each other so that when the first arm 23 or the second arm 24 is rotated by the transferer 22, a biasing force of the tension spring 26 is thereby exerted on the control stick 10. The neutral position changer 30 also changes the neutral position of the control stick 10 by rotationally moving the restrictor 34 about the axis X3.

Specifically, the neutral position changer 30 includes a brake 31, a shaft 32, a connector 33, and the restrictor 34.

The shaft 32 has the axis X3 and is rotatable about the axis X3. In this example, the axis X3 is coaxial with the axis X2, and corresponds to a fourth axis. The shaft 32 is a member extending in the left-right direction. The restrictor 34 is a rod that extends in the same direction as the shaft 32, that is, in the left-right direction. In this example, a cross section orthogonal to the axis of the restrictor 34 has a circular shape, but may have other shapes such as a rectangle. The connector 33 connects the shaft 32 and the restrictor 34 to each other. In this example, the connector 33 is a rod extending in the top-bottom direction. The connector 33 has an upper end, which is one end, connected to one end of the shaft 32, and a lower end, which is the other end, connected to one end of the restrictor 34.

More specifically, the shaft 32 and the restrictor 34 are connected to extend in opposite ways in the left-right direction from the connector 33. In this example, as illustrated in FIG. 2, the shaft 32 is connected to extend leftward from the connector 33, and the restrictor 34 is connected to extend rightward from the connector 33. That is, the connector 33 is located between the shaft 32 and the restrictor 34 in the direction in which the shaft 32 and the restrictor 34 extend.

The thus-configured restrictor 34 is rotatable about the axis X3 together with the shaft 32 and the connector 33. More specifically, the restrictor 34 is turnable about the axis X3 as a turning center.

The shaft 32 is coupled to the brake 31. The brake 31 is, for example, an electromagnetic brake. The brake 31 is switchable between a braking state of braking rotation operation of the shaft 32 and a releasing state of releasing rotation operation of the shaft 32. When the brake 31 is switched to the braking state, rotation operation of the restrictor 34 is braked, as illustrated in FIGS. 6 and 7. Thus, in this state, rotation of the first arm 23 and the second arm 24 in the direction in which the first arm 23 and the second arm 24 approach each other is restricted by the restrictor 34. Accordingly, with rotation of the control stick 10, one of the first arm 23 and the second arm 24 rotates, and rotation of the other is restricted by the restrictor 34 fitted in the second recesses 23d and 24d. Accordingly, the tension spring 26 is deformed to generate an operating reaction force.

When the brake 31 becomes a releasing state, the restrictor 34 becomes a non-restriction state and becomes rotatable about the axis X3. The rotation of the restrictor 34 about the axis X3 changes the neutral position of the control stick 10. That is, the neutral position changer 30 switches the brake 31 to the releasing state to release rotation operation of the shaft 32 so that the restrictor 34 thereby moves about the axis X3.

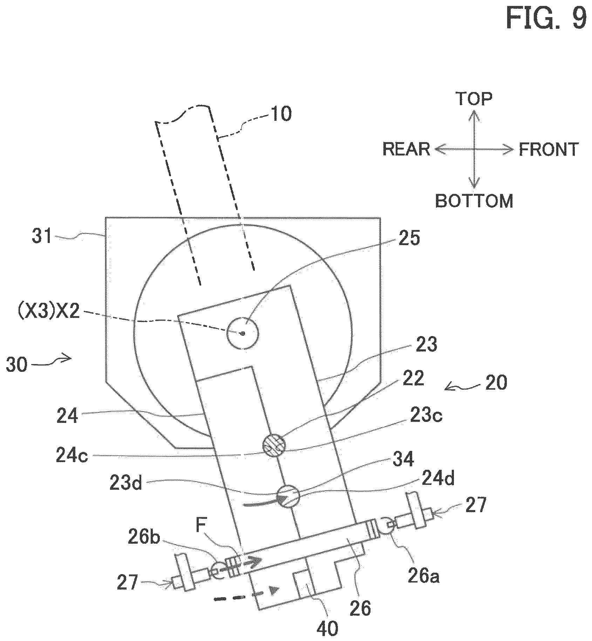

For example, in performing operation of rotating the control stick 10 rearward, when the operation switch 11 is pushed once, for example, the brake 31 is switched to the releasing state. Then, as illustrated in FIG. 9, the first arm 23 is rotated about the axis X2 by the transferer 22. At this time, since the restrictor 34 is in the non-restriction state, the second arm 24 is pulled toward the first arm 23 by an elastic force F of the tension spring 26 and rotates about the axis X2 together with the restrictor 34. That is, the second arm 24 is rotated by the elastic force F of the tension spring 26, and the restrictor 34 is rotated about the axis X3 by rotation of the second arm 24. Further, when the brake 31 is switched to the releasing state, in the reaction force generator 20, the first arm 23, the second arm 24, the transferer 22, and the tension spring 26 can rotate about the axis X2 as one unit.

Then, when pushing of the operation switch 11 is released, the brake 31 is switched to the braking state. Then, rotation operation of the restrictor 34 is stopped, and the position of the restrictor 34 is fixed. The position of the control stick 10 at this time is a new neutral position. In this manner, the neutral position of the control stick 10 is changed.

The simulation control apparatus 100 further includes an approach state detection sensor 40 that detects whether the control stick 10 is in a neutral state or not based on an approach state of the first arm 23 and the second arm 24, such as the distance, an angle, or a contact state between the first arm 23 and the second arm 24. The approach state detection sensor 40 may be any sensor that can detect an approach state of the first arm 23 and the second arm 24. In this example, the approach state detection sensor 40 is a position detection sensor, and included in one of the first arm 23 and the second arm 24. In this example, the approach state detection sensor 40 is included in the second arm 24. More specifically, the approach state detection sensor 40 is attached to a second end 24b that is a lower end of the second arm 24. The position detection sensor is, for example, a contact type sensor, and detects a contact state when the sensor contacts the second end 23b of the first arm 23. This detection can determine whether the control stick 10 is in the neutral state or not.

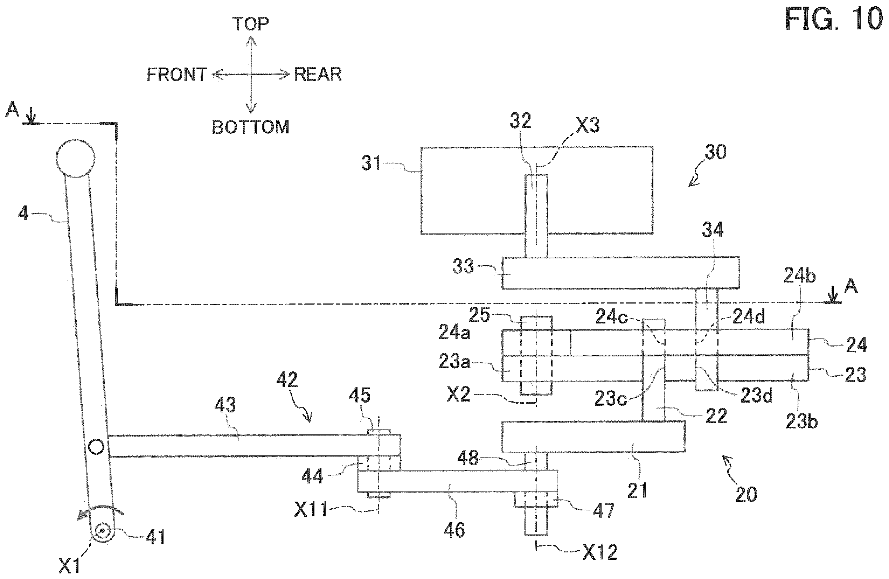

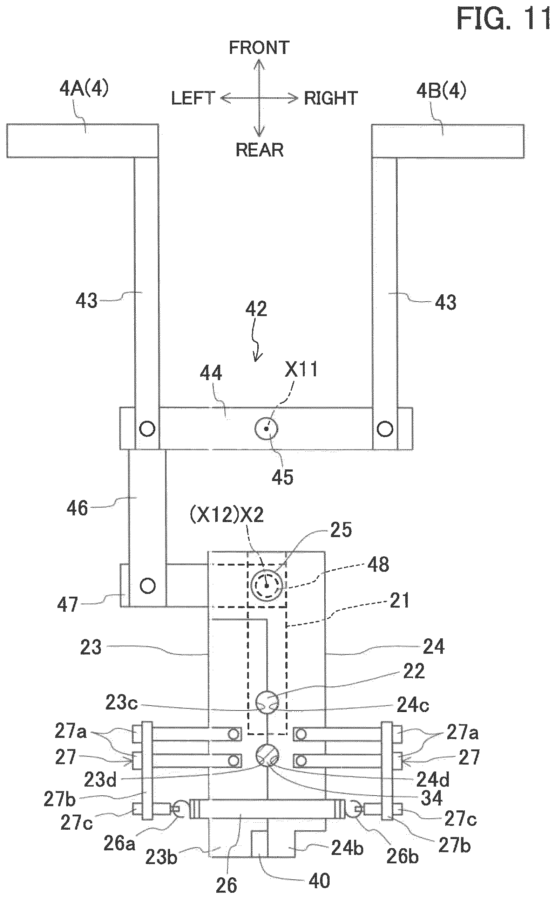

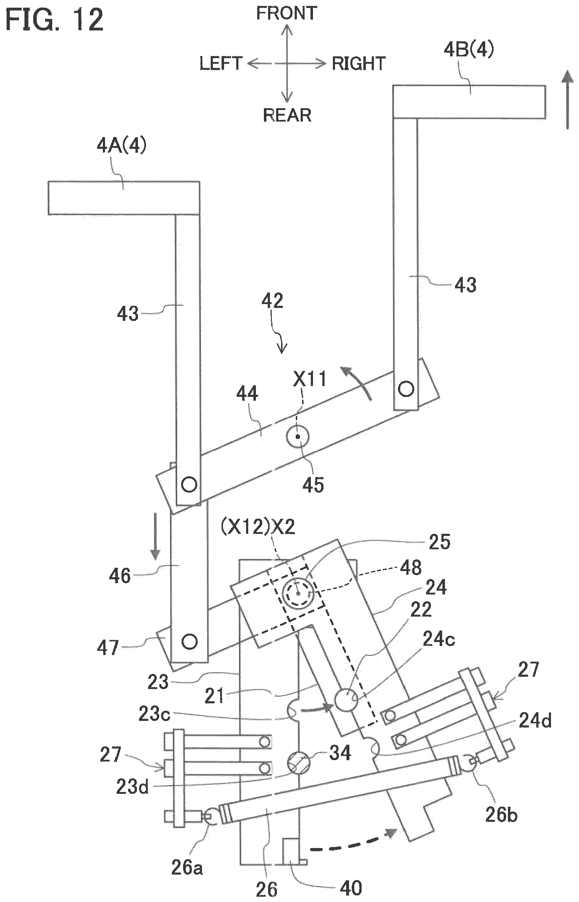

FIG. 10 is a schematic view illustrating the ladder pedal 4 of the simulation control apparatus 100 and a peripheral portion thereof seen from the left. FIG. 11 is a cross-sectional view taken along line A-A in FIG. 10. FIG. 12 illustrates an example of operation of the reaction force generator 20 and corresponds to FIG. 11.

A connection state between the ladder pedal 4, and the reaction force generator 20 and the neutral position changer 30 associated with the ladder pedal 4 will be described. In the case of the ladder pedal 4, unlike the control stick 10 and the collective lever 3 as other operating members, the rotation shaft of the ladder pedal 4 and the connector 21 of the reaction force generator 20 are connected to each other through a link mechanism 42. In this example, aspects different from the case of the control stick 10 described above will be described. In the following description, when the ladder pedal 4 for the left foot and the ladder pedal 4 for the right foot are distinguished, these pedals are referred to as a left pedal 4A and a right pedal 4B, respectively.

In a manner similar to the control stick 10, the ladder pedal 4 is rotatable about axis X1 in both directions. The shaft 41 having the axis X1 is located at the lower end of each of the left pedal 4A and the right pedal 4B. The shaft 41 is a member extending in the left-right direction. The shafts 41 of the left pedal 4A and the right pedal 4B are coaxial. The shafts 41 are fixed to the left pedal 4A and the right pedal 4B. That is, the ladder pedal 4 is non-rotatable with respect to the shaft 41. In this manner, the ladder pedal 4 rotates about the axis X1 in the front-rear direction together with the shaft 41.

In this example, each link mechanism 42 includes a first link 43, a second link 44, a third link 46, a fourth link 47, and two shafts 45 and 48. Two first links 43 are used for the left pedal 4A and the right pedal 4B. Each of the first links 43 is a member extending in the front-rear direction. The two first links 43 are rotatably coupled at one end to the left pedal 4A and the right pedal 4B. The two first links 43 are rotatably coupled at the other end to both ends the second links 44. The second links 44 are members each extending in the left-right direction. The shaft 45 having an axis X11 is located at the center of each second link 44. The second link 44 is rotatable about the axis X11, that is, rotatable with respect to the shaft 45. The shaft 45 is a member extending in the top-bottom direction.

The third link 46 is a member extending in the front-rear direction. One end of the third link 46 is rotatably coupled to one end of the second link 44. In this example, one end of the third link 46 is coupled to an end of the second link 44 to which the first link 43 for the left pedal 4A is coupled. The other end of the third link 46 is rotatably coupled to the fourth link 47. The fourth link 47 is a member extending in the left-right direction. The shaft 48 having an axis X12 is located at an end of the fourth link 47 opposite to the third link 46. The shaft 48 is a member extending in the top-bottom direction. The shaft 48 penetrates the fourth link 47 and is fixed to the fourth link 47. The fourth link 47 rotates about the axis X12 together with the shaft 48. One end of the shaft 48 is fixed to the connector 21 of the reaction force generator 20. In this example, the axis X12 is coaxial with the axis X2 of the arms 23 and 24. That is, in the case of the ladder pedals 4, unlike the case of the control stick 10 described above, the axis X1 is perpendicular to the axis X2.

The connector 21 has one end connected to the shaft 48 and the other end connected to the transferer 22. More specifically, the shaft 48 and the transferer 22 are connected to extend from the connector 21 in opposite ways in the top-bottom direction. In this example, as illustrated in FIG. 10, the shaft 48 is connected to extend downward from the connector 21, and the transferer 22 is connected to extend upward from the connector 21. That is, the connector 21 is located between the shaft 48 and the transferer 22 in the direction in which the shaft 48 and the transferer 22 extend. The shaft 48, the connector 21, and the transferer 22 rotate about the axis X12 as one unit.

In this manner, the shaft 41 as the rotation shaft of the ladder pedals 4 and the connector 21 of the reaction force generator 20 are connected to each other through the link mechanism 42. In this manner, in the case of the ladder pedals 4, in a manner similar to the case of the control stick 10 described above, the transferer 22 turns with rotation of the ladder pedals 4 as operating members about the axis X1. More specifically, the transferer 22 turns about the axis X12 as a turning center. For example, as illustrated in FIG. 12, when the right pedal 4B is pressed, the second link 44 rotates about the axis X11, and accordingly, the connector 21 and the transferer 22 rotate about the axis X12. In this manner, the second arm 24 rotates about the axis X2, for example. In the manner described above, in the case of the ladder pedals 4 in which the axis X1 is perpendicular to the axis X2, rotation of the ladder pedals 4 is transferred by the transferer 22 so that the arms 23 and 24 thereby rotate. Configurations and effects of the reaction force generator 20 and the neutral position changer 30 of the ladder pedals 4 are similar to those of the control stick 10 described above.

As described above, the flight simulation control apparatus 100 includes the control stick 10 that rotates about the first axis (axis X1) in both directions, and the reaction force generator 20 including the tension spring 26 that is deformed by rotation of the control stick 10 and generates an operating reaction force of the control stick 10. The reaction force generator 20 also includes the transferer 22 that is connected to the control stick 10 and rotates together with the control stick 10, the first arm 23 that rotates about the second axis (axis X2) and deforms the tension spring 26 when rotation of the control stick 10 in one direction is transferred to the first arm 23 through the transferer 22, and the second arm 24 that rotates about the third axis (axis X2) extending in the same direction as the second axis (axis X2) and deforms the tension spring 26 when rotation of the control stick 10 in another direction is transferred to the second arm 24 through the transferer 22.

With this configuration, the reaction force generator 20 transfers rotation of the operating member such as the control stick 10 by the transferer 22 to cause the first arm 23 and the second arm 24 to rotate so that the tension spring 26 is thereby deformed to generate an operating reaction force. Thus, as compared to a mechanism in which the rod is displaced in the axial direction thereof by rotation of the control stick to thereby deform the elastic structure and generate an operating reaction force, for example, operation space for the first arm 23, the second arm 24, and other components necessary for generating an operating reaction force can be reduced. As a result, the size of the reaction force generator 20, and further the size of the simulation control apparatus 100, can be reduced.

In the reaction force generator 20 of the flight simulation control apparatus 100, the first arm 23 and the second arm 24 are located adjacent to each other in rotation directions thereof, and are biased by the tension spring 26 in directions in which the first arm 23 and the second arm 24 approach each other. The simulation control apparatus 100 further includes the neutral position changer 30 that includes the restrictor 34 that is located between the first arm 23 and the second arm 24 and restricts rotation of the first arm 23 and the second arm 24 in the directions in which the first arm 23 and the second arm 24 approach each other. The neutral position changer 30 changes the neutral position of the control stick 10 or other components by rotating the transferer 22, the first arm 23, and the second arm 24 together about the first axis, the second axis, and the third axis through rotational movement of the restrictor 34 about the fourth axis (axis X3) extending in the identical direction to the second axis (axis X2).

With this configuration, when one of the first arm 23 and the second arm 24 is rotated by the transferer 22, rotation of the other is restricted by the restrictor 34. Thus, the tension spring 26 is reliably deformed to generate an operating reaction force. Since the neutral position of the control stick 10 is changed by rotationally moving the restrictor 34, the neutral position can be easily changed. In addition, since the configuration rotationally operates the restrictor 34, operation space for the neutral position changer 30 necessary for changing the neutral position is reduced. Accordingly, the size of the neutral position changer 30, and further the simulation control apparatus 100, can be reduced.

In the flight simulation control apparatus 100, the second axis and the third axis are the common axis (axis X2).

With this configuration, operation space necessary for the first arm 23 and the second arm 24 can be further reduced. Accordingly, the size of the simulation control apparatus can be further reduced. In addition, the number of parts of the reaction force generator 20 can be reduced.

In the flight simulation control apparatus 100, the first axis (axis X1) and the axis (axis X2) common to the first axis are coaxial.

With this configuration, size reduction includes operation space necessary for the transferer 22 connected to the control stick 10, and thus, the size of the simulation control apparatus can be further reduced.

The flight simulation control apparatus 100 further includes the approach state detection sensor 40 that detects a neutral state in which the first arm 23 and the second arm 24 are closest to each other, based on an approach state of the first arm 23 and the second arm 24.

With this configuration, since any sensor may be used so long as it detects the neutral position based on the approach state of the first arm 23 and the second arm 24, the approach state detection sensor 40 can be easily attached to a position where the first arm 23 and the second arm 24 approach each other, for example. In addition, since the neutral state is detected by detecting approach of the first and second arms 23 and 24, the neutral position can be easily detected. Since the approach state detection sensor 40 is easily attached, the approach state detection sensor 40 is easily replaced.

In the simulation control apparatus 100, the tension spring 26 is connected between the first arm 23 and the second arm 24 to generate a predetermined elastic force in the neutral state.

With this configuration, since the tension spring 26 has a predetermined elastic force in the neutral state in which the first arm 23 and the second arm 24 are closest to each other, a breakout force can be obtained. By obtaining the breakout force, an operating reaction force can be obtained from start of operation from the neutral position of the control stick 10. Thus, an operating sense closer to an actual sense can be obtained in simulation training.

Since a breakout force is obtained, the control stick 10 in the neutral position is not easily displaced by a slight external force such as vibrations. Thus, the neutral position of the control stick 10 can be held with stability.

In the flight simulation control apparatus 100, the reaction force generator 20 further includes the adjuster 27c that adjusts the predetermined elastic force of the tension spring 26.

With this configuration, a breakout force can be adjusted by adjusting the predetermined elastic force of the tension spring 26. Thus, an appropriate breakout force in accordance with situations of simulation training.

### OTHER EMBODIMENTS

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the simulation control apparatus 100 is also applicable as a simulation control apparatus for an aircraft other than a helicopter. The simulation control apparatus 100 is applicable to a simulation control apparatus for a mobile object other than the aircraft.

Although the elastic structure is one tension spring 26 connected to the first arm 23 and the second arm 24 in the above example, the technique disclosed here is not limited to this example. For example, the elastic structure may be a compression spring located outside each of the first arm 23 and the second arm 24.

The approach state detection sensor 40 is not limited to the position detection sensor and may be a non-contact sensor, for example. As the non-contact sensor, a distance sensor such as a laser is used, for example, and may be located at a position other than the lower ends of the arms 23 and 24 or at a position other than the arms 23 and 24.

The second axis and the third axis are the common axis, that is, the axis X2, in the above example, but may be different axes. The axis X2 as the common axis and the axis X1 as the first axis may not be coaxial.

Multiple adjusters 27c may be located in the top-bottom direction. By adjusting the adjusters 27c connecting the first end 26a and the second end 26b of the tension spring 26, an operating force gradient can be changed without replacing the tension spring 26 itself.

The operating force gradient may be changed by including screw holes in the second member 27b and changing the screw holes in which the adjusters 27c are screwed.

The device 10 may further include a mechanism that changes the lengths of the arms 23 and 24, the direction from the axis X1 to the axis of the transferer 22 in the top-bottom direction, and the distance from the axis X3 to the axis of the restrictor 34 in the top-bottom direction. By changing the lengths and the distances, the operating force gradient can be changed without replacing the tension spring 26 itself.

The reaction force generator 20 or the neutral position changer 30 is also applicable to an operating member that has a rotation shaft and preferably generates an operating reaction force or performs trim adjustment, other than the collective lever 3, the ladder pedals 4, and the control stick 10.

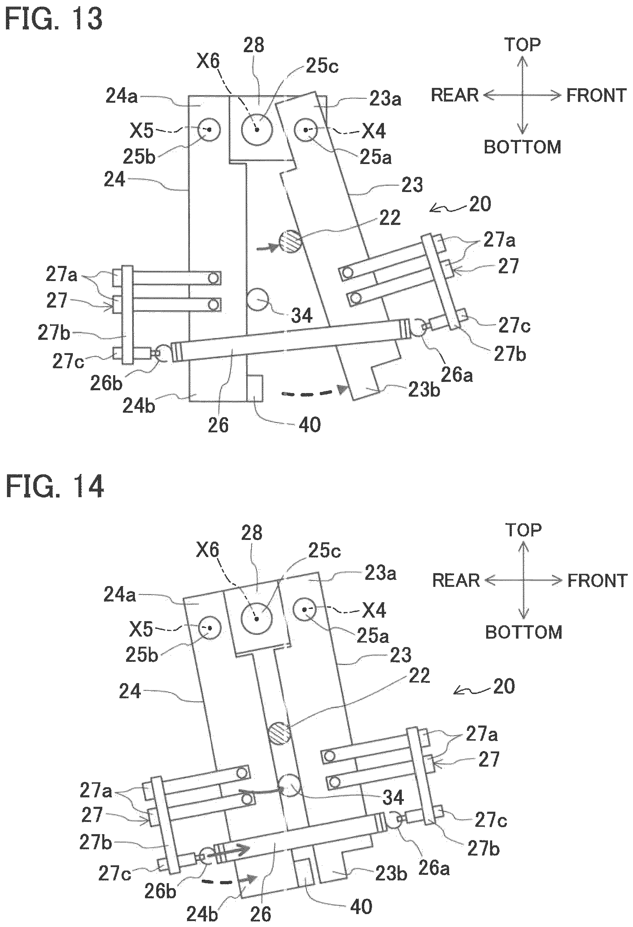

In the reaction force generator 20, the configurations of the arms 23 and 24 may be changed as follows. FIG. 13 illustrates a schematic configuration of a reaction force generator 20 according to another embodiment. FIG. 14 illustrates operation of changing a neutral position according to another embodiment and corresponds to FIG. 13.

In two arms 23 and 24 in this variation, a rotation center at rotation with the neutral position held is different from a rotation center at rotation in changing the neutral position. Each of the two arms 23 and 24 has a rotation center at rotation with the neutral position held. Specifically, as illustrated in FIG. 13, the first arm 23 is rotatable about an axis X4, and the second arm 24 is rotatable about an axis X5 different from the axis X4. A shaft 25a having the axis X4 is located at a first end 23a of the first arm 23, and a shaft 25b having the axis X5 is located at a first end 24a of the second arm 24. In this variation, the axis X4 is an example of a second axis, and the axis X5 is an example of a third axis.

The reaction force generator 20 of this variation includes a base 28 coupling the first arm 23 and the second arm 24. The base 28 is a member extending in the front-rear direction, and the first arm 23 and the second arm 24 are respectively coupled to both ends of the base 28. Specifically, the shafts 25a and 25b are respectively located at both ends of the base 28. The shafts 25a and 25b may be fixed to the base 28 or may be rotatable with respect to the base 28. The base 28 is rotatable about an axis X6 different from the axes X4 and X5. A shaft 25c having the axis X6 is located at the center of the base 28. In this configuration, when the base 28 rotates about the axis X6, the two arms 23 and 24 also rotate about the axis X6.

In the thus-configured reaction force generator 20, as illustrated in FIG. 13, while a brake 31 is in a braking state, a transferer 22 rotates with rotation of the control stick 10, and accordingly, the first arm 23, for example, rotates about the axis X4. Accordingly, the tension spring 26 is deformed to generate an operating reaction force. At this time, rotation of the second arm 24 toward the first arm 23, that is, rotation of the second arm 24 about the axis X5, is restricted by the restrictor 34.

When the brake 31 becomes a releasing state, the restrictor 34 becomes a non-restriction state to be rotatable. When the restrictor 34 rotates, the neutral position of the control stick 10 is changed accordingly. When the brake 31 is switched to the releasing state in rotating the control stick 10, the restrictor 34 becomes the non-restriction state, and thus, the first arm 23 is biased to rotate about the axis X4 by the transferer 22, whereas the second arm 24 is pulled toward the first arm 23 by an elastic force of the tension spring 26 and is biased to rotate about the axis X5, for example. That is, both the first arm 23 and the second arm 24 are biased to rotate together. Then, as illustrated in FIG. 14, since the first arm 23 and the second arm 24 cannot rotate about the axis X4 and the axis X5, respectively, the first arm 23 and the second arm 24 rotate about the axis X6 together with the base 28. Then, in a manner similar to the embodiment described above, the brake 31 is switched to the braking state so that the position of the restrictor 34 is thereby fixed. In this manner, the neutral position of the control stick 10 is changed. Other configurations, effects, and advantages are similar to those of the embodiment.

Two pairs of the simulation control apparatuss 100 of the embodiment may be prepared and placed side by side in the left-right direction. In this case, both a pilot and a copilot can perform simulation training at the same time.

## Claims

1. A flight simulation control apparatus comprising:
an operating member (10) that rotates about a first axis (X1) in both directions; and
a reaction force generator (20) including an elastic structure (26) that is deformed by rotation of the operating member and generates an operating reaction force of the operating member, wherein
the reaction force generator further includes
a transferer (22) that is connected to the operating member and rotates together with the operating member,
a first arm (23) that rotates about a second axis and deforms the elastic structure when rotation of the operating member in one direction is transferred to the first arm through the transferer, and
a second arm (24) that rotates about a third axis extending in an identical direction to the second axis and deforms the elastic structure when rotation of the operating member in another direction is transferred to the second arm through the transferer, wherein
in the reaction force generator (20), the first arm (23) and the second arm (24) are located adjacent to each other in rotation directions thereof, and are biased by the elastic structure (26) in directions in which the first arm and the second arm approach each other,
**characterized in that**
the flight simulation control apparatus further includes a neutral position changer (30) that includes a restrictor (34) that is located between the first arm and the second arm and restricts rotation of the first arm and the second arm in the directions in which the first arm and the second arm approach each other, and
the neutral position changer changes a neutral position of the operating member (10) by rotating the transferer (22), the first arm, and the second arm together about the first axis (X1), the second axis, and the third axis through rotational movement of the restrictor about a fourth axis (X3) extending in an identical direction to the second axis.

2. The flight simulation control apparatus according to claim 1, wherein
the second axis and the third axis are a common axis (X2).

3. The flight simulation control apparatus according to claim 2, wherein
the first axis (X1) and the common axis (X2) are coaxial.

4. The flight simulation control apparatus according to claim 1, further comprising
an approach state detection sensor (40) that detects a neutral state in which the first arm (23) and the second arm (24) are closest to each other, based on an approach state of the first arm and the second arm.

5. The flight simulation control apparatus according to claim 1, wherein
the elastic structure (26) is connected between the first arm (23) and the second arm (24) to generate a predetermined elastic force in the neutral state.

6. The flight simulation control apparatus according to claim 5, wherein
the reaction force generator (20) further includes an adjuster (27c) that adjusts the predetermined elastic force of the elastic structure (26).

## Patentansprüche

1. Vorrichtung zur Steuerung einer Flugsimulation, umfassend:
ein Betätigungselement (10), das sich in beide Richtungen um eine erste Achse (X1) dreht; und
einen Reaktionskraftgenerator (20), der eine elastische Struktur (26) aufweist, die sich durch Drehen des Betätigungselements verformt und eine Betätigungsreaktionskraft des Betätigungselements erzeugt, wobei
der Reaktionskraftgenerator ferner Folgendes aufweist:
eine Übertragungseinrichtung (22), die mit dem Betätigungselement verbunden ist und sich zusammen mit dem Betätigungselement dreht,
einen ersten Arm (23), der sich um eine zweite Achse dreht und die elastische Struktur verformt, wenn die Drehung des Betätigungselements in einer Richtung durch die Übertragungseinrichtung auf den ersten Arm übertragen wird, und
einen zweiten Arm (24), der sich um eine dritte Achse dreht, die sich in einer identischen Richtung wie die zweite Achse erstreckt, und der die elastische Struktur verformt, wenn die Drehung des Betätigungselements in einer anderen Richtung durch die Übertragungseinrichtung auf den zweiten Arm übertragen wird, wobei
in dem Reaktionskraftgenerator (20) der erste Arm (23) und der zweite Arm (24) sich in ihren Drehrichtungen benachbart zueinander befinden und durch die elastische Struktur (26) in Richtungen vorgespannt sind, in denen sich der erste Arm und der zweite Arm einander nähern,
**dadurch gekennzeichnet, dass**
die Vorrichtung zur Steuerung der Flugsimulation ferner einen Neutralpositionswechsler (30) aufweist, der einen Begrenzer (34) enthält, der sich zwischen dem ersten Arm und dem zweiten Arm befindet und die Drehung des ersten Arms und des zweiten Arms in den Richtungen begrenzt, in denen sich der erste Arm und der zweite Arm einander nähern, und
der Neutralpositionswechsler eine neutrale Position des Betriebselements (10) wechselt durch Drehen der Übertragungseinrichtung (22), des ersten Arms und des zweiten Arms zusammen um die erste Achse (X1), die zweite Achse und die dritte Achse über eine Drehbewegung des Begrenzers um eine vierte Achse (X3), die sich in einer identischen Richtung wie die zweite Achse erstreckt.

2. Vorrichtung zur Steuerung der Flugsimulation nach Anspruch 1, wobei es sich bei der zweiten Achse und der dritten Achse um eine gemeinsame Achse (X2) handelt.

3. Vorrichtung zur Steuerung der Flugsimulation nach Anspruch 2, wobei die erste Achse (X1) und die gemeinsame Achse (X2) koaxial sind.

4. Vorrichtung zur Steuerung der Flugsimulation nach Anspruch 1, die Ferner Folgendes umfasst:
einen Annäherungszustandserfassungssensor (40), der basierend auf einem Annäherungszustand des ersten Arms und des zweiten Arms einen neutralen Zustand erfasst, in dem der erste Arm (23) und der zweite Arm (24) einander am nächsten sind.

5. Vorrichtung zur Steuerung der Flugsimulation nach Anspruch 1, wobei die elastische Struktur (26) zwischen dem ersten Arm (23) und dem zweiten Arm (24) verbunden ist, um im neutralen Zustand eine vorbestimmte elastische Kraft zu erzeugen.

6. Vorrichtung zur Steuerung der Flugsimulation nach Anspruch 5, wobei der Reaktionskraftgenerator (20) ferner eine Anpassungseinrichtung (27c) enthält, die die vorbestimmte elastische Kraft der elastischen Struktur (26) anpasst.

## Revendications

1. Dispositif de commande de simulation de vol comprenant :
un élément de manœuvre (10) qui tourne sur un premier axe (X1) dans les deux sens, et
un générateur de force de réaction (20) comprenant une structure élastique (26) qui se déforme sous l'effet de la rotation de l'élément de manœuvre et qui génère une force de réaction de manœuvre de l'élément de manœuvre ; étant entendu que
le générateur de force de réaction comprend en outre
un organe de transmission (22) qui est relié à l'élément de manœuvre et qui tourne conjointement avec l'élément de manœuvre,
un premier bras (23) qui tourne sur un deuxième axe et qui déforme la structure élastique lorsque la rotation de l'élément de manœuvre dans une direction est transmise au premier bras par l'intermédiaire de l'organe de transmission, et
un deuxième bras (24) qui tourne sur un troisième axe, s'étendant dans une direction identique au deuxième axe, et qui déforme la structure élastique lorsque la rotation de l'élément de manœuvre dans une autre direction est transmise au deuxième bras par l'intermédiaire de l'organe de transmission, étant entendu que
dans le générateur de force de réaction (20), le premier bras (23) et le deuxième bras (24) sont situés adjacents l'un à l'autre dans leurs sens de rotation, et sont sollicités par la structure élastique (26) dans des directions dans lesquelles le premier bras et le deuxième bras se rapprochent l'un de l'autre ;
**caractérisé en ce que**
le dispositif de commande de simulation de vol comprend en outre un changeur de position neutre (30) qui comprend un organe limiteur (34) qui est situé entre le premier bras et le deuxième bras et qui limite la rotation du premier bras et du deuxième bras dans les directions dans lesquelles le premier bras et le deuxième bras se rapprochent l'un de l'autre, et
le changeur de position neutre modifie une position neutre de l'élément de manœuvre (10) en faisant tourner l'organe de transmission (22), le premier bras et le deuxième bras conjointement sur le premier axe (X1), le deuxième axe et le troisième axe par le biais d'un mouvement de rotation de l'organe limiteur sur un quatrième axe (X) s'étendant dans une direction identique au deuxième axe.

2. Dispositif de commande de simulation de vol selon la revendication 1, dans lequel le deuxième axe et le troisième axe sont un axe commun (X2).

3. Dispositif de commande de simulation de vol selon la revendication 2, dans lequel le premier axe (X1) et l'axe commun (X2) sont coaxiaux.

4. Dispositif de commande de simulation de vol selon la revendication 1, comprenant en outre un capteur de détection d'état d'approche (40) qui détecte un état neutre dans lequel le premier bras (23) et le deuxième bras (24) sont au plus proche l'un de l'autre, compte tenu d'un état d'approche du premier bras et du deuxième bras.

5. Dispositif de commande de simulation de vol selon la revendication 1, dans lequel
la structure élastique (26) est montée entre le premier bras (23) et le deuxième bras (24) pour générer une force élastique prédéterminée à l'état neutre.

6. Dispositif de commande de simulation de vol selon la revendication 5, dans lequel
le générateur de force de réaction (20) comprend en outre un dispositif de réglage (27c) qui règle la force élastique prédéterminée de la structure élastique (26).
